# FASCICULE DE BREVET EUROPEEN

(11) **EP 2 986 188 B1**
(45) Date de publication et mention de la délivrance du brevet: **24.05.2023**
(21) Numéro de dépôt: 14722266.5
(22) Date de dépôt: 11.04.2014
(51) Int. Cl.: A47J 37/04, A47J 37/06

(54) **PROCEDE DE CUISSON POUR APPAREIL DE CUISSON AVEC MOYEN DE REMUAGE ET APPAREIL DE CUISSON CORRESPONDANT**
KOCHVERFAHREN FÜR EINE KOCHVORRICHTUNG MIT EINEM BEWEGUNGSAUSLÖSENDEN MITTEL UND ENTSPRECHENDE KOCHVORRICHTUNG
COOKING METHOD FOR A COOKING APPLIANCE WITH A MOTION INDUCING MEANS AND CORRESPONDING COOKING APPLIANCE

(30) Priorité: 19.04.2013 FR 1353587
(43) Date de publication de la demande: 24.02.2016
(73) Titulaire: SEB S.A., 69130 Ecully (FR)
(72) Inventeur: DELRUE, Olivier, F-21260 Selongey (FR); LETAIN, François, F-21120 Marcilly-sur-Tille (FR)
(74) Mandataire: SEB Développement
(86) Numéro de dépôt international: PCT/FR2014/050895
(87) Numéro de publication internationale: WO 2014/170589

(56) Documents cités:
- FR-A1- 2 871 043
- JP-A- 2008 178 462
- US-A1- 2005 011 370
- US-A1- 2005 223 906

## Description

La présente invention concerne le domaine technique des procédés de cuisson pour appareils électriques de cuisson comportant un moyen de remuage agencé dans un moyen de réception d'aliments ainsi que les appareils de cuisson correspondant.

La présente invention concerne notamment, mais non exclusivement, un procédé de cuisson pour les appareils électriques prévus pour le brassage et la cuisson d'aliments en morceaux, tels que les frites ou morceaux de poulet, comportant un moyen de remuage disposé dans une cuve agencée dans un boîtier logeant un dispositif de chauffage à air chaud, dans lesquels le moyen de remuage et la cuve sont conçus pour être mis en mouvement l'un par rapport à l'autre, de manière à brasser et remuer les aliments et la matière grasse au sein de la cuve. Le document WO 2006/000699 divulgue de tels appareils de cuisson.

Le document WO 2007/088279 divulgue un appareil de cuisson du type précité comportant une pale de remuage entraînée en rotation dans un récipient. La géométrie de la pale de remuage et le mouvement de la pale de remuage dans le récipient contribuent à réorienter les frites les unes par rapport aux autres. Les différentes faces des frites peuvent ainsi entrer successivement en contact avec le fond de la cuve susceptible de recueillir de la matière grasse, les frites disposées sur le dessus de la cuve étant davantage exposées au flux d'air chaud. Ces dispositions permettent d'obtenir une meilleure homogénéité de cuisson. Un inconvénient de la construction précitée réside toutefois dans l'élévation de l'amas de frites repoussé par la pale de remuage. Cet effet peut conduire à dimensionner la cuve en fonction de la recette exigeant l'espace le plus important, au détriment de la compacité de l'appareil. Cet effet peut aussi conduire à réduire la quantité d'aliments préparés pour la recette exigeant l'espace le plus important, au détriment de la capacité de l'appareil. De plus, la pale de remuage est mobile par rapport à un obstacle agencé dans la cuve. Cet obstacle permettant de bloquer partiellement l'amas de frites repoussé par la pale de remuage contribue à renforcer l'élévation de l'amas de frites repoussé par la pale de remuage.

Le document JP2008178462 divulgue un appareil de cuisson pour la réalisation de pain et de confiture en effectuant une étape de préchauffage puis une étape de chauffage et d'agitation des aliments. Le moyen de remuage est neutralisé pendant l'étape de préchauffage. Cependant, la durée d'une étape de préchauffage dépend des conditions de température initiales de l'appareil et les aliments ne sont introduits dans l'appareil qu'après cette étape de préchauffage. Une étape de préchauffage ne saurait être considérée comme une étape de cuisson dans laquelle la température et le temps de cuisson sont déterminés.

Un objet de la présente invention est d'améliorer la qualité de cuisson des aliments en morceaux recouverts de panure.

Ce but est atteint par un procédé de cuisson pour un appareil de cuisson d'aliments comprenant un moyen de réception prévu pour recevoir les aliments, un moyen de remuage disposé au sein du moyen de réception, au moins un moyen de chauffe principal, le moyen de réception et le moyen de remuage étant conçus pour être animés d'un mouvement relatif de rotation, le moyen de réception présentant une ouverture supérieure, l'appareil comprenant des moyens de contrôle au moins du mouvement relatif de rotation et du au moins un moyen de chauffe principal caractérisé en ce que le procédé de cuisson comprend :
- une première étape de cuisson durant laquelle le mouvement relatif de rotation du moyen de réception et du moyen de remuage est neutralisé et au moins un moyen de chauffe principal est commandé pour réguler la température selon une première valeur de consigne ;
- une deuxième étape de cuisson durant laquelle le mouvement relatif de rotation du moyen de réception et du moyen de remuage est actif et au moins un moyen de chauffe principal est commandé pour réguler la température selon une deuxième valeur de consigne, supérieure à la première.

En outre selon l'invention, avant les étapes de cuisson, les aliments recouverts de panure sont disposés dans le moyen de réception, la durée de la première étape de cuisson est comprise entre 35%-45% du temps cumulé des deux étapes de cuisson, et durant la première étape, la non-rotation du moyen de remuage permet de préserver la panure recouvrant les aliments, et à l'issue de cette première étape la panure a gagné en résistance mécanique et peut supporter le remuage opéré durant la deuxième étape, le moyen de chauffe principal génère un flux chauffant entrant dans le moyen de réception par l'ouverture supérieure.

Selon une variante de réalisation, la première valeur de consigne est comprise entre 135°C et 145°C.

Selon une autre variante de réalisation, la deuxième valeur de consigne est comprise entre 165°C et 180°C.

Selon une autre variante de réalisation, le temps de cuisson cumulé des deux étapes de cuisson correspond au temps de cuisson sélectionné par un utilisateur.

Selon une autre variante de réalisation, la vitesse moyenne du mouvement relatif de rotation du moyen de réception par rapport au moyen de remuage est comprise entre 1 et 5 tr/min

Selon une autre variante de réalisation, le mouvement relatif de rotation du moyen de réception par rapport au moyen de remuage est continu.

Selon une autre variante de réalisation, le mouvement relatif de rotation du moyen de réception par rapport au moyen de remuage est intermittent.

L'invention concerne également un appareil de cuisson d'aliments comprenant un moyen de réception prévu pour recevoir les aliments, un moyen de remuage disposé au sein du moyen de réception, au moins un moyen de chauffe principal, le moyen de réception et le moyen de remuage étant conçus pour être animés d'un mouvement relatif de rotation, le moyen de réception présentant une ouverture supérieure, l'appareil comprenant des moyens de contrôle au moins du mouvement relatif de rotation et du au moins un moyen de chauffe principal caractérisé en ce que les moyens de contrôle, équipés d'une unité de contrôle électronique, comprennent un programme de cuisson comprenant :
- une première étape de cuisson durant laquelle les moyens de contrôle neutralisent le mouvement relatif de rotation du moyen de réception et du moyen de remuage et commandent ledit au moins un moyen de chauffe principal pour réguler la température selon une première valeur de consigne ;
- une deuxième étape de cuisson durant laquelle les moyens de contrôle activent le mouvement relatif de rotation du moyen de réception et du moyen de remuage et commandent ledit au moins un moyen de chauffe principal pour réguler la température selon une deuxième valeur de consigne, supérieure à la première,

avant les étapes de cuisson, les aliments recouverts de panure sont disposés dans le moyen de réception, la durée de la première étape de cuisson est comprise entre 35%-45% du temps cumulé des deux étapes de cuisson,
durant la première étape, la non-rotation du moyen de remuage permet de préserver la panure recouvrant les aliments, et à l'issue de cette première étape la panure a gagné en résistance mécanique et peut supporter le remuage opéré durant la deuxième étape ;
le moyen de chauffe principal génère un flux chauffant entrant dans le moyen de réception par l'ouverture supérieure.

L'invention sera mieux comprise à l'étude d'un exemple de réalisation, pris à titre nullement limitatif, illustré dans les figures annexées, dans lesquelles :
- la figure 1 est une vue en coupe longitudinale d'un exemple de réalisation d'un appareil pour mettre en oeuvre le procédé selon l'invention,
- la figure 2 est une vue en perspective en position ouverte de l'appareil représenté sur la figure 1, dans lequel le moyen de réception a été retiré,
- la figure 3 est une vue en perspective du moyen de remuage prévu pour être agencé dans le moyen de réception,
- la figure 4 est une vue en perspective du moyen de réception.

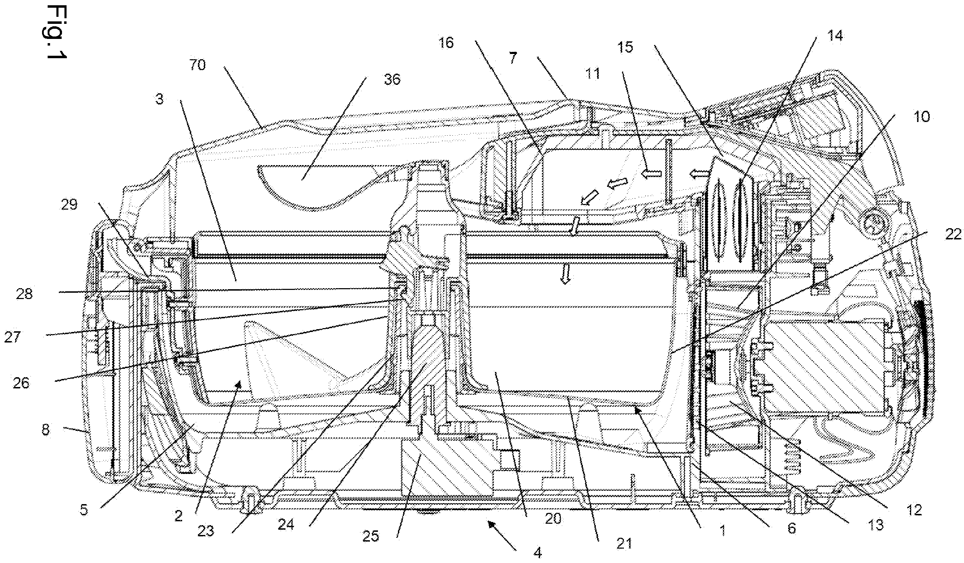

L'appareil de cuisson représenté à la figure 1 comprend un moyen de réception 1 prévu pour recevoir les aliments, un moyen de remuage 2 disposé au sein du moyen de réception 1. Le moyen de réception 1 présente une ouverture supérieure 3. Le moyen de réception 1 et le moyen de remuage 2 sont conçus pour être animés d'un mouvement relatif de rotation.

Plus particulièrement, le moyen de réception 1 est agencé dans un boîtier 4. Le boîtier 4 définit un logement 5 dans lequel est agencé le moyen de réception 1. Le boîtier 4 comporte un corps 6 surmonté d'un couvercle 7. Le couvercle 7 comporte une partie transparente ou translucide 70 agencée au-dessus du moyen de réception 1.

L'appareil de cuisson comporte un moyen de chauffe 10. Tel que représenté sur la figure 1, le moyen de chauffe 10 génère un flux chauffant 11 entrant dans le moyen de réception 1 par l'ouverture supérieure 3.

Plus particulièrement, l'appareil de cuisson comporte un ventilateur 12 prévu pour aspirer l'air présent dans le logement 5 par une admission d'air 13 et pour propulser l'air sur un élément chauffant 14 agencé dans un conduit 15 débouchant dans le logement 5. Une partie 16 du conduit 15 est ménagée dans le couvercle 7.

Plus particulièrement, le moyen de réception 1 est formé par une cuve 20 comportant un fond 21 et une paroi latérale 22. Selon la variante de réalisation de la figure 1, le fond 21 est incliné vers le bas en direction de la paroi latérale 22. La cuve 20 présente une ouverture centrale 23 prévue pour le passage d'un axe d'entraînement 24 entraîné en rotation par un moteur 25. Une cheminée 26 est montée sur l'ouverture centrale 23. Le moyen de remuage 2 est monté sur l'axe d'entraînement 24. Le moyen de remuage 2 présente un organe d'accrochage 27 prévu pour venir en prise avec un organe de retenue 28 ménagé dans la cheminée 26. La cuve 20 est avantageusement réalisée en matériau métallique, de préférence en matériau métallique revêtu ou en acier inoxydable. Le moyen de réception 1 comporte un support 29 fixé à la cuve 20.

Le moyen de réception 1 comporte une poignée 8. La poignée 8 est par exemple montée articulée sur le support 29.

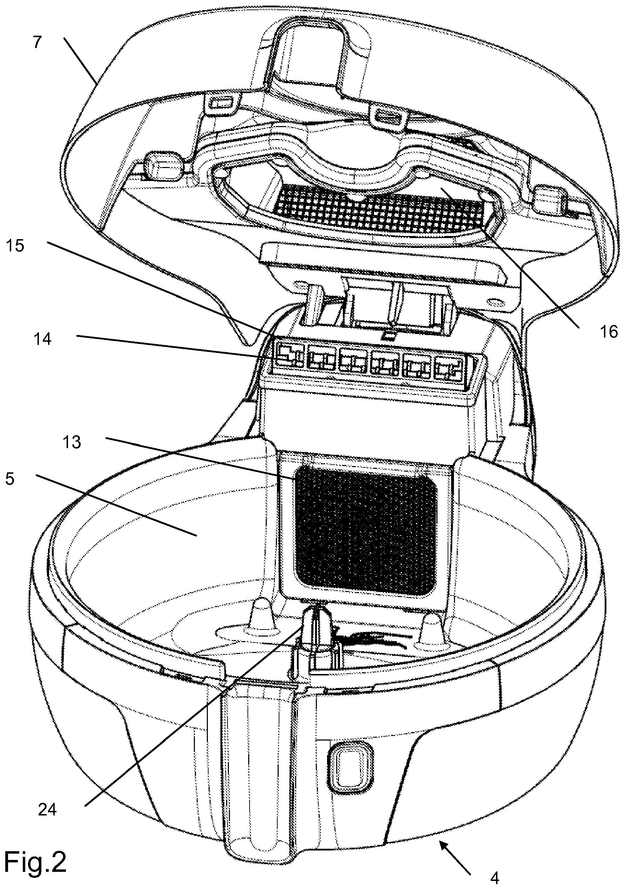

Le moyen de réception 1 est monté amovible par rapport au boîtier 4, la figure 2 illustrant le boîtier 4 avec le couvercle 7 ouvert en l'absence du moyen de réception 1.

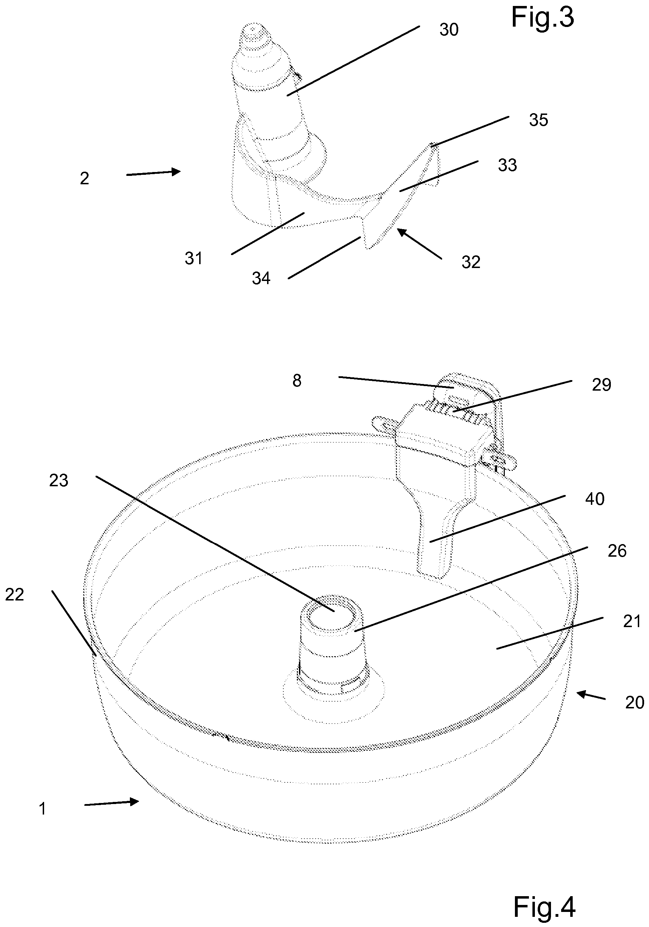

Le moyen de remuage 2 illustré sur la figure 3 comporte un moyeu 30 prévu pour coiffer la cheminée 26, et un bras 31 issu du moyeu 30. Le moyen de remuage 2 comprend un moyen de soulèvement des aliments 32 formé par une surface fuyante 33 inclinée par rapport à l'axe du moyeu 30. La largeur de la surface fuyante 33 diminue depuis une partie inférieure avant 34 vers une partie supérieure arrière 35. Une cuiller 36 est montée amovible sur l'extrémité supérieure du moyeu 30.

Tel que visible sur la figure 4, un obstacle latéral 40 est positionné dans le moyen de réception 1. Plus particulièrement, l'obstacle latéral 40 est issu du support 29. L'obstacle latéral 40 s'étend sur au moins une partie de la hauteur de la paroi latérale 22 de la cuve 20.

Selon l'invention, le moyen de remuage est entrainé en rotation par un moteur en liaison mécanique avec l'axe d'entrainement 24. Le moteur est commandé par une unité de contrôle électronique assurant l'activation ou la neutralisation du moteur et donc la rotation du moyen de remuage 2. La vitesse moyenne de rotation du moyen de remuage 2 est comprise entre 1 et 5 tr/min.

De même, l'unité de contrôle électronique assure l'alimentation des moyens de chauffe 10 de l'appareil. Notamment, l'unité de contrôle électronique est conformée pour assurer le fonctionnement de l'appareil selon au moins deux niveaux de température.

L'appareil comprend également de façon connue en soi une interface utilisateur permettant à celui-ci notamment de mettre en marche l'appareil, de choisir, modifier ou annuler un mode de cuisson préprogrammé dans l'unité de contrôle électronique.

Selon l'invention, l'unité de contrôle électronique permet de mettre en œuvre un procédé particulier de cuisson permettant de préserver la qualité des aliments recouverts de panure. La mise en oeuvre de ce procédé permet notamment d'assurer le dorage de la panure sans en dégrader l'aspect visuel.

Le procédé de cuisson comprend pour cela deux étapes principales. Une première étape du procédé consiste, pendant une durée déterminée, à neutraliser le mouvement relatif de rotation du moyen de réception 1 et du moyen de remuage 2 et à maintenir la température à l'intérieur de l'appareil à une première valeur de température.

Selon la première étape, la non rotation du moyen de remuage 2 permet de préserver la panure recouvrant les aliments, qui en début de cuisson, est fragile (risque d'effritement). La température choisie pendant cette première étape permet de commencer la cuisson des aliments et donc la solidification de la panure, sans toutefois provoquer de brunissement de celle-ci. En effet, pendant cette étape la même surface des aliments est exposée au flux d'air chaud alors que d'autres surfaces ne sont pas directement exposées. A l'issue de cette première étape la panure a gagné en résistance mécanique et peut supporter le remuage opéré durant la deuxième étape.

En effet, la deuxième étape du procédé consiste à simultanément activer le mouvement relatif de rotation du moyen de réception 1 et du moyen de remuage 2 et maintenir la température à l'intérieur de l'appareil à une deuxième valeur de température supérieure à la température de la première étape.

La deuxième étape correspond à la phase principale de cuisson et de dorage des aliments panés. Le remuage des aliments dans le récipient permet notamment d'exposer toute la surface des aliments au flux chauffant. La température choisie pour cette deuxième étape permet d'obtenir le dorage de la panure et une cuisson complète des aliments.

Le mouvement relatif du moyen de remuage par rapport au moyen de réception peut-être continu ou intermittent.

Selon une variante de réalisation, la température de la première étape est comprise entre 135°C et 145°C. La température de la deuxième étape est comprise entre 165°C et 180°C.

Le choix de la température dépend notamment du type de panure et du type d'aliments à cuire.

Selon une autre caractéristique du procédé selon l'invention, la durée de la première étape représente entre 35 et 45% de la durée cumulée des deux étapes. Il a été constaté par la demanderesse que cette répartition particulière du temps total des deux étapes permettait d'obtenir un résultat particulièrement satisfaisant. Notamment, la panure reste exempte de dégradation mécanique (effritement, cassures). La panure est croustillante et dorée sur toute la surface des aliments.

Pour mieux comprendre le procédé selon l'invention, le fonctionnement et l'utilisation de l'appareil sont décrits en détail ci-après.

L'utilisateur prépare dans un premier temps les aliments panés. De façon classique, les dernières étapes de préparation consistent à recouvrir les aliments de chapelure puis d'appliquer de l'huile sur la surface des aliments. Les aliments sont ensuite conservés au réfrigérateur.

Ensuite, l'utilisateur met en place le moyen de réception 1 dans le logement 5 du boîtier 4, monte le moyen de remuage 2 dans le moyen de réception 1, dispose les aliments panés dans le moyen de réception 1 et ajoute si désiré de la matière grasse ou de l'huile en utilisant la cuiller 36.

Lors de la mise en marche de l'appareil, l'utilisateur sélectionne le mode de cuisson approprié et choisit le temps de cuisson par l'intermédiaire de l'interface utilisateur. Selon une autre variante, une durée prédéterminée peut-être affichée puis modifiée par l'utilisateur en fonction de l'aliment et ou de la recette. A titre d'exemple la durée totale du cycle de cuisson est comprise entre 10 et 50 min.

Lorsque l'utilisateur démarre le cycle de cuisson choisi de l'appareil, la première étape de procédé selon l'invention est déclenchée par l'unité de contrôle électronique. Celle-ci commande les moyens de chauffe 10 pour générer le flux chauffant 11 entrant dans le moyen de réception 1 par l'ouverture supérieure 3. Par ailleurs, le moteur 25 entraînant en rotation le moyen de remuage 2 dans le moyen de réception 1 n'est pas activé. La régulation de température selon la première valeur de température est assurée par exemple par l'intermédiaire d'un capteur de type CTN (coefficient de température négatif). Lorsque que la durée de la première étape correspondant par exemple à 40% de la durée cumulée des deux étapes est écoulée, la deuxième étape du procédé selon l'invention débute.

Selon cette deuxième étape, les moyens de chauffe sont maintenus actifs. La température de régulation est modifiée et augmentée jusqu'à une deuxième valeur. Simultanément, le moteur 25 entraînant en rotation le moyen de remuage 2 dans le moyen de réception 1 est activé par l'unité de contrôle électronique.

Le moyen de remuage 2 contribue à déplacer les aliments panés les uns par rapport aux autres.

Notamment, l'obstacle latéral 40 bloque une partie des aliments disposés en périphérie et favorise l'élévation de l'aliment sous l'action du moyen de soulèvement des aliments 32. Ces actions permettent d'exposer toute la surface des aliments au flux chauffant.

Lorsque la durée totale du cycle de cuisson est écoulée, les moyens de chauffe et le moteur sont désactivés.

L'utilisateur peut retirer le moyen de réception 1 du boîtier 4 en utilisant une poignée 8.

A titre de variante, d'autres types de moyens de chauffe 10 peuvent être envisagés, notamment un moyen de chauffe par rayonnement générant un flux chauffant 11 rayonnant entrant dans le moyen de réception 1 par l'ouverture supérieure 3, ou encore un moyen de chauffe disposé dans ou sous le moyen de réception 1. Si désiré le moyen de chauffe peut être solidaire du moyen de réception 1.

A titre de variante, le moyen de remuage 2 n'est pas nécessairement entraîné en rotation dans le moyen de réception 1. Notamment, le moyen de réception peut être monté entraîné en rotation, si désiré dans un boîtier.

A titre de variante, le moyen de réception 1 n'est pas nécessairement formé par une cuve. Le moyen de réception présente de préférence un fond et une paroi latérale. Le moyen de réception peut notamment être formé par un panier ajouré.

La présente invention n'est nullement limitée à l'exemple de réalisation décrit et à ses variantes, mais englobe de nombreuses modifications dans le cadre des revendications.

## Revendications

1. Procédé de cuisson pour un appareil de cuisson d'aliments comprenant un moyen de réception (1) prévu pour recevoir les aliments, un moyen de remuage (2) disposé au sein du moyen de réception (1), au moins un moyen de chauffe principal (10), le moyen de réception (1) et le moyen de remuage (2) étant conçus pour être animés d'un mouvement relatif de rotation, le moyen de réception (1) présentant une ouverture supérieure (3), l'appareil comprenant des moyens de contrôle au moins du mouvement relatif de rotation et du au moins un moyen de chauffe principal **caractérisé en ce que** le procédé de cuisson comprend :
- une première étape de cuisson durant laquelle le mouvement relatif de rotation du moyen de réception (1) et du moyen de remuage (2) est neutralisé et au moins un moyen de chauffe principal (10) est commandé pour réguler la température selon une première valeur de consigne ;
- une deuxième étape de cuisson durant laquelle le mouvement relatif de rotation du moyen de réception (1) et du moyen de remuage (2) est actif et au moins un moyen de chauffe principal (10) est commandé pour réguler la température selon une deuxième valeur de consigne, supérieure à la première,
avant les étapes de cuisson, les aliments recouverts de panure sont disposés dans le moyen de réception, la durée de la première étape de cuisson est comprise entre 35%-45% du temps cumulé des deux étapes de cuisson
durant la première étape, la non-rotation du moyen de remuage (2) permet de préserver la panure recouvrant les aliments, et à l'issue de cette première étape la panure a gagné en résistance mécanique et peut supporter le remuage opéré durant la deuxième étape ;
le moyen de chauffe principal (10) génère un flux chauffant (11) entrant dans le moyen de réception (1) par l'ouverture supérieure (3).

2. Procédé de cuisson selon la revendication 1, **caractérisé en ce que** la première valeur de consigne est comprise entre 135°C et 145°C.

3. Procédé de cuisson selon l'une des revendications précédentes, **caractérisé en ce que** la deuxième valeur de consigne est comprise entre 165°C et 180°C.

4. Procédé de cuisson selon l'une des revendications 1 à 3, **caractérisé en ce que** le temps de cuisson cumulé des deux étapes de cuisson correspond au temps de cuisson sélectionné par un utilisateur.

5. Procédé de cuisson selon l'une des revendications 1 à 4, **caractérisé en ce que** la vitesse moyenne du mouvement relatif de rotation du moyen de réception (1) par rapport au moyen de remuage (2) est comprise entre 1 et 5 tr/min.

6. Procédé de cuisson selon l'une des revendications 1 à 5, **caractérisé en ce que** le mouvement relatif de rotation du moyen de réception (1) par rapport au moyen de remuage (2) est continu.

7. Procédé de cuisson selon l'une des revendications 1 à 5, **caractérisé en ce que** le mouvement relatif de rotation du moyen de réception (1) par rapport au moyen de remuage (2) est intermittent.

8. Appareil de cuisson d'aliments comprenant un moyen de réception (1) prévu pour recevoir les aliments, un moyen de remuage (2) disposé au sein du moyen de réception (1), au moins un moyen de chauffe principal, le moyen de réception (1) et le moyen de remuage (2) étant conçus pour être animés d'un mouvement relatif de rotation, le moyen de réception (1) présentant une ouverture supérieure (3), l'appareil comprenant des moyens de contrôle au moins du mouvement relatif de rotation et du au moins un moyen de chauffe principal **caractérisé en ce que** les moyens de contrôle, équipés d'une unité de contrôle électronique, comprennent un programme de cuisson comprenant :
- une première étape de cuisson durant laquelle les moyens de contrôle neutralisent le mouvement relatif de rotation du moyen de réception (1) et du moyen de remuage (2) et commandent ledit au moins un moyen de chauffe principal pour réguler la température selon une première valeur de consigne ;
- une deuxième étape de cuisson durant laquelle les moyens de contrôle activent le mouvement relatif de rotation du moyen de réception (1) et du moyen de remuage (2) et commandent ledit au moins un moyen de chauffe principal pour réguler la température selon une deuxième valeur de consigne, supérieure à la première,
avant les étapes de cuisson, les aliments recouverts de panure sont disposés dans le moyen de réception, la durée de la première étape de cuisson est comprise entre 35%-45% du temps cumulé des deux étapes de cuisson
durant la première étape, la non-rotation du moyen de remuage (2) permet de préserver la panure recouvrant les aliments, et à l'issue de cette première étape la panure a gagné en résistance mécanique et peut supporter le remuage opéré durant la deuxième étape ;
le moyen de chauffe principal (10) génère un flux chauffant (11) entrant dans le moyen de réception (1) par l'ouverture supérieure (3).

## Patentansprüche

1. Garverfahren für ein Gerät zum Garen von Lebensmitteln, das ein Aufnahmemittel (1), welches dafür vorgesehen ist, die Lebensmittel aufzunehmen, ein innerhalb des Aufnahmemittels (1) angeordnetes Rührmittel (2), mindestens ein Hauptheizmittel (10) umfasst, wobei das Aufnahmemittel (1) und das Rührmittel (2) so gestaltet sind, dass sie in eine relative Drehbewegung versetzt werden können, wobei das Aufnahmemittel (1) eine obere Öffnung (3) aufweist, wobei das Gerät Mittel zum Steuern mindestens der relativen Drehbewegung und des mindestens einen Hauptheizmittels umfasst, **dadurch gekennzeichnet, dass** das Garverfahren umfasst:
- einen ersten Garschritt, bei dem die relative Drehbewegung des Aufnahmemittels (1) und des Rührmittels (2) aufgehoben wird und mindestens ein Hauptheizmittel (10) so angesteuert wird, dass die Temperatur gemäß einem ersten Sollwert geregelt wird;
- einen zweiten Garschritt, bei dem die relative Drehbewegung des Aufnahmemittels (1) und des Rührmittels (2) aktiv ist und mindestens ein Hauptheizmittel (10) so angesteuert wird, dass die Temperatur gemäß einem zweiten Sollwert, der höher ist als der erste, geregelt wird,
die mit Panade überzogenen Lebensmittel vor den Garschritten in dem Aufnahmemittel angeordnet werden, die Dauer des ersten Garschritts im Bereich zwischen 35 % - 45 % der kumulierten Zeit der zwei Garschritte liegt,
beim ersten Schritt das Nichtdrehen des Rührmittels (2) es ermöglicht, die Panade, mit denen die Lebensmittel überzogen sind, zu bewahren, und am Ende dieses ersten Schritts die Panade an mechanischer Festigkeit gewonnen hat und das beim zweiten Schritt durchgeführte Rühren aushalten kann;
das Hauptheizmittel (10) einen Heizstrom (11) erzeugt, der durch die obere Öffnung (3) in das Aufnahmemittel (1) eintritt.

2. Garverfahren nach Anspruch 1, **dadurch gekennzeichnet, dass** der erste Sollwert im Bereich zwischen 135 °C und 145 °C liegt.

3. Garverfahren nach einem der vorstehenden Ansprüche, **dadurch gekennzeichnet, dass** der zweite Sollwert im Bereich zwischen 165 °C und 180 °C liegt.

4. Garverfahren nach einem der Ansprüche 1 bis 3, **dadurch gekennzeichnet, dass** die kumulierte Garzeit der zwei Garschritte der von einem Benutzer ausgewählten Garzeit entspricht.

5. Garverfahren nach einem der Ansprüche 1 bis 4, **dadurch gekennzeichnet, dass** die durchschnittliche Geschwindigkeit der relativen Drehbewegung des Aufnahmemittels (1) in Bezug auf das Rührmittel (2) im Bereich zwischen 1 und 5 U/min liegt.

6. Garverfahren nach einem der Ansprüche 1 bis 5, **dadurch gekennzeichnet, dass** die relative Drehbewegung des Aufnahmemittels (1) in Bezug auf das Rührmittel (2) kontinuierlich ist.

7. Garverfahren nach einem der Ansprüche 1 bis 5, **dadurch gekennzeichnet,**
**dass** die relative Drehbewegung des Aufnahmemittels (1) in Bezug auf das Rührmittel (2) intermittierend ist.

8. Gerät zum Garen von Lebensmitteln, das ein Aufnahmemittel (1), welches dafür vorgesehen ist, die Lebensmittel aufzunehmen, ein innerhalb des Aufnahmemittels (1) angeordnetes Rührmittel (2), mindestens ein Hauptheizmittel umfasst, wobei das Aufnahmemittel (1) und das Rührmittel (2) so gestaltet sind, dass sie in eine relative Drehbewegung versetzt werden können, wobei das Aufnahmemittel (1) eine obere Öffnung (3) aufweist, wobei das Gerät Mittel zum Steuern mindestens der relativen Drehbewegung und des mindestens einen Hauptheizmittels umfasst, **dadurch gekennzeichnet, dass** die mit einer elektronischen Steuereinheit ausgestatteten Steuermittel ein Garprogramm umfassen, welches umfasst:
- einen ersten Garschritt, bei dem die Steuermittel die relative Drehbewegung des Aufnahmemittels (1) und des Rührmittels (2) aufheben und das mindestens eine Hauptheizmittel so ansteuern, dass die Temperatur gemäß einem ersten Sollwert geregelt wird;
- einen zweiten Garschritt, bei dem die Steuermittel die relative Drehbewegung des Aufnahmemittels (1) und des Rührmittels (2) aktivieren und das mindestens eine Hauptheizmittel so ansteuern, dass die Temperatur gemäß einem zweiten Sollwert, der höher ist als der erste, geregelt wird,
die mit Panade überzogenen Lebensmittel vor den Garschritten in dem Aufnahmemittel angeordnet werden, die Dauer des ersten Garschritts im Bereich zwischen 35 % - 45 % der kumulierten Zeit der zwei Garschritte liegt,
beim ersten Schritt das Nichtdrehen des Rührmittels (2) es ermöglicht, die Panade, mit denen die Lebensmittel überzogen sind, zu bewahren, und am Ende dieses ersten Schritts die Panade an mechanischer Festigkeit gewonnen hat und das beim zweiten Schritt durchgeführte Rühren aushalten kann;
das Hauptheizmittel (10) einen Heizstrom (11) erzeugt, der durch die obere Öffnung (3) in das Aufnahmemittel (1) eintritt.

## Claims

1. Method of cooking for a food-cooking apparatus comprising a receiving means (1) provided to receive the food, a steering means (2) disposed within the receiving means (1), at least one main heating means (10), the receiving means (1) and the stirring means (2) being designed to be made to rotate one relative to the other, the receiving means (1) having a upper opening (3), the appliance comprising means for controlling at least the relative rotation and the at least one main heating means, **characterised in that** the cooking method comprises:
- a first cooking step during which the relative rotation of the receiving means (1) and the stirring means (2) is neutralized and the at least one main heating means (10) is controlled to regulate the temperature to a first set-point value;
- a second cooking step during which the relative rotation of the receiving means (1) and the stirring means (2) is active and the at least one main heating means (10) is controlled to regulate the temperature to a second set-point value that is greater than the first set-point value,
before the cooking steps, the food covered with breadcrumbs are placed in the receiving means, the duration of the first cooking step is between 35%-45% of the cumulative time of the two cooking steps
during the first step, the non-rotation of the stirring means (2) makes it possible to preserve the breadcrumbs covering the food, and at the end of this first step the breadcrumbs have gained in mechanical strength and can withstand the stirring carried out during the second step;
the main heating means (10) generates a heating stream (11) entering the receiving means (1) through the upper opening (3).

2. Cooking method according to claim 1, **characterised in that** the first set-point value is between 135°C and 145°C.

3. Cooking method according to any one of the preceding claims, **characterised in that** the second set-point value is between 165°C and 180°C.

4. Cooking method according to any one of claims 1 to 3, **characterised in that** the cumulative cooking time of the two cooking steps corresponds to the cooking time selected by a user.

5. Cooking method according to any one of claims 1 to 4, **characterised in that** the average speed of the relative rotation of the receiving means (1) with respect to the stirring means (2) is between 1 and 5 rpm.

6. Cooking method according to any one of claims 1 to 5, **characterised in that** the relative rotation of the receiving means (1) with respect to the stirring means (2) is continuous.

7. Cooking method according to any one of claims 1 to 5, **characterised in that** the relative rotation of the receiving means (1) with respect to the stirring means (2) is intermittent.

8. Food-cooking apparatus comprising a receiving means (1) provided to receive the food, a steering means (2) disposed within the receiving means (1), at least one main heating means (10), the receiving means (1) and the stirring means (2) being designed to be made to rotate one relative to the other, the receiving means (1) having a upper opening (3), the appliance comprising means for controlling at least the relative rotation and the at least one main heating means, **characterised in that** the control means, provided with an electronic control unit, comprise a cooking program comprising:
- a first cooking step during which the relative rotation of the receiving means (1) and the stirring means (2) is neutralized by the control means, which control the at least one main heating means to regulate the temperature to a first set-point value;
- a second cooking step during which the relative rotation of the receiving means (1) and the stirring means (2) is activated by the control means, which control the at least one main heating means to regulate the temperature to a second set-point value, that is greater than the first set-point value,
before the cooking steps, the food covered with breadcrumbs are placed in the receiving means, the duration of the first cooking step is between 35%-45% of the cumulative time of the two cooking steps
during the first step, the non-rotation of the stirring means (2) makes it possible to preserve the breadcrumbs covering the food, and at the end of this first step the breadcrumbs have gained in mechanical strength and can withstand the stirring carried out during the second step;
the main heating means (10) generates a heating stream (11) entering the receiving means (1) through the upper opening (3).
